# DEMANDE DE BREVET EUROPEEN

(11) **EP 2 138 353 A1**
(43) Date de publication de la demande: **30.12.2009**
(21) Numéro de dépôt: 09161021.2
(22) Date de dépôt: 25.05.2009
(51) Int. Cl.: B60R 5/04

(54) **Dispositif d'escamotage d'une tablette arrière de véhicule automobile, par entraînement en rotation et en translation**

(30) Priorité: 24.06.2008 FR 0854190
(71) Demandeur: Peugeot Citroën Automobiles SA, 78140 Vélizy-Villacoublay (FR)
(72) Inventeur: Brunet , Fabrice, 75015 Paris (FR)
(74) Mandataire: Vigand, Régis Louis Michel

(57) **Abrégé**

Un dispositif (D) est dédié à l'escamotage d'une tablette (TA) qui est située à proximité d'un volet de coffre (VC) monté à rotation sur une partie arrière supérieure d'une structure (SV) de véhicule automobile. Ce dispositif (D) comprend i) un mécanisme d'escamotage (BPi) monté à rotation, d'une part, par rapport à deux parties latérales opposées de la structure (SV), et d'autre part, par rapport à deux parties latérales opposées de la tablette (TA), pour entraîner la tablette (TA) en rotation vers le haut et en translation vers l'avant de la structure (SV) lorsqu'il est entraîné en rotation par rapport à la structure (SV), et ii) au moins un cordon (CNj) fixé au mécanisme d'escamotage (BPi) et à une partie supérieure du volet (VC) pour entraîner le mécanisme d'escamotage (BPi) en rotation par rapport à la structure (SV) lorsque le volet (VC) est entraîné en rotation vers le haut.

## Description

L'invention concerne les tablettes rigides escamotables qui équipent les parties arrières de certains véhicules automobiles, et plus précisément les dispositifs chargés d'escamoter de telles tablettes.

La plupart des tablettes arrières (rigides) de véhicule automobile comprennent une extrémité «avant» (placée près des sièges arrières), qui est montée à rotation par rapport à deux parties latérales opposées de la structure (ou caisse), et une partie arrière (placée près du volet rotatif permettant d'accéder au coffre arrière), qui est solidarisée à une première extrémité d'un ou deux cordons (ou articulations) dont la seconde extrémité est fixée à une partie supérieure du volet rotatif. De tels montages sont notamment décrits dans les documents brevet DE 10260573 et FR 2467567.

Grâce à ce type de montage, lorsque le volet (rotatif) est entraîné en rotation vers le haut, la tablette est également automatiquement entraînée en rotation vers le haut. La partie arrière de la tablette s'étendant jusqu'au volet lorsqu'elle est placée dans sa position rabattue, et le volet présentant généralement une inclinaison vers l'avant du véhicule automobile, on comprendra que lorsque le volet est entraîné en rotation vers le haut, la partie terminale de la partie arrière de la tablette est obligée de sortir de la structure.

La partie arrière ouverte de la structure (dite «entrée de volet»), que vient fermer le volet, étant généralement plus étroite dans sa partie supérieure que dans sa partie centrale, la largeur maximale de la partie arrière de la tablette est donc limitée par la largeur de l'entrée de volet au niveau où elle est située lorsque le volet est dans sa position escamotée (redressée). En d'autres termes, le volet présente une largeur qui est sensiblement plus petite que celle que présente la partie arrière de la structure au niveau où est située la tablette lorsqu'elle est dans sa position rabattue.

Afin de compenser cette différence de largeur et de permettre le support de la tablette lorsqu'elle est rabattue, on est donc obligé d'installer fixement sur les deux parties latérales opposées de la structure, au niveau où la tablette est dans sa position rabattue, ce que l'homme de l'art appelle des «appuis de tablette». Ces derniers étant fixes et volumineux, ils constituent une gêne lorsque le chargement que l'on veut placer dans le coffre (au moins) est volumineux.

L'invention a donc pour but d'améliorer la situation.

Elle propose à cet effet un dispositif dédié à l'escamotage d'une tablette destinée à être installée à proximité d'un volet de coffre, monté à rotation sur une partie arrière supérieure d'une structure de véhicule automobile.

Ce dispositif d'escamotage se caractérise par le fait qu'il comprend :
- un mécanisme d'escamotage destiné à être monté à rotation, d'une part, par rapport à deux parties latérales opposées de la structure, et d'autre part, par rapport à deux parties latérales opposées de la tablette, afin d'entraîner cette dernière en rotation vers le haut et en translation vers l'avant de la structure lorsqu'il est entraîné en rotation par rapport à la structure, et
- au moins un cordon fixé au mécanisme d'escamotage et destiné à être fixé à une partie supérieure du volet de manière à entraîner le mécanisme d'escamotage en rotation par rapport à la structure lorsque le volet est entraîné en rotation vers le haut.

Ainsi, la tablette peut être entraînée de sa position rabattue vers sa position escamotée (redressée) tout en demeurant en permanence intégralement à l'intérieur de la structure lorsque le volet est entraîné en rotation vers le haut.

Le dispositif d'escamotage selon l'invention peut comporter d'autres caractéristiques qui peuvent être prises séparément ou en combinaison, et notamment :
- son mécanisme d'escamotage peut comprendre deux biellettes principales comportant des premières extrémités, destinées à être montées à rotation par rapport à des premiers endroits des deux parties latérales opposées de la structure, et des secondes extrémités, opposées aux premières et destinées à être montées à rotation par rapport à des seconds endroits des deux parties latérales opposées de la tablette, plus proches du volet que les premiers endroits lorsque la tablette est placée dans sa position rabattue. Dans ce cas, chaque cordon comprend des première et seconde extrémités qui sont respectivement fixée à la première extrémité de l'une des biellettes principales et destinée à être fixée à la partie supérieure du volet, de manière à entraîner en rotation la tablette par rapport à la structure lorsque le volet est entraîné en rotation vers le haut ;
   ➢ il peut comprendre deux cordons dont les premières extrémités sont respectivement fixées aux premières extrémités des biellettes principales ;
   ➢ les premières extrémités des biellettes principales peuvent être couplées entre elles par une entretoise transversale ;
- il peut comprendre au moins une butée montée sur l'une des parties latérales opposées de la tablette et agencée pour reposer sur un cordon lorsque le volet est entraîné en rotation vers le haut, de manière à permettre le maintien de la tablette dans sa position escamotée (redressée) vers le haut ;
   ➢ chaque butée peut comprendre une gorge dans laquelle passe un cordon ;
- en variante, son mécanisme d'escamotage peut comprendre des moyens de blocage agencés pour autoriser sa rotation par rapport à la tablette sur un secteur angulaire limité, prédéfini ;
   ➢ les moyens de blocage peuvent comprendre au moins une biellette auxiliaire comprenant une première extrémité, solidarisée à l'une des parties latérales opposées de la tablette et agencée pour limiter la rotation du mécanisme d'escamotage sur le secteur angulaire limité, et une seconde extrémité, munie d'une butée propre à supporter la tablette ;
      - les moyens de blocage peuvent comprendre deux biellettes auxiliaires ;
   ➢ il peut comprendre au moins un guide monté sur l'une des parties latérales opposées de la structure et agencé pour guider le déplacement d'un cordon lorsque le volet est entraîné en rotation ;
      • chaque guide peut par exemple être une roulette qui est munie d'une gorge dans laquelle passe un cordon.

L'invention propose également un ensemble constitué d'une tablette et d'un dispositif d'escamotage du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue de côté, une portion de la partie arrière d'une structure de véhicule automobile équipée d'une tablette et d'un premier exemple de réalisation de dispositif d'escamotage selon l'invention en position rabattue,
- la figure 2 illustre schématiquement, dans une vue en perspective, l'ensemble constitué de la tablette et du dispositif d'escamotage illustrés sur la figure 1, toujours en position rabattue,
- la figure 3 illustre schématiquement la portion de partie arrière illustrée sur la figure 1, mais avec la tablette, le dispositif d'escamotage et le volet en position escamotée (redressée),
- la figure 4 illustre schématiquement, dans une vue de côté, une portion de la partie arrière d'une structure de véhicule automobile équipée d'une tablette et d'un second exemple de réalisation de dispositif d'escamotage selon l'invention en position rabattue,
- la figure 5 illustre schématiquement la portion de partie arrière illustrée sur la figure 4, mais avec la tablette, le dispositif d'escamotage et le volet en position escamotée (redressée).

Les dessins annexés pourront non seulement servir à compléter l'invention, mais aussi contribuer à sa définition, le cas échéant.

L'invention a pour but de proposer un dispositif d'escamotage capable d'entraîner une tablette, installée dans la partie arrière d'une structure de véhicule automobile, d'une position rabattue vers une position escamotée (redressée) sans que l'une de ses parties ne sorte de cette structure.

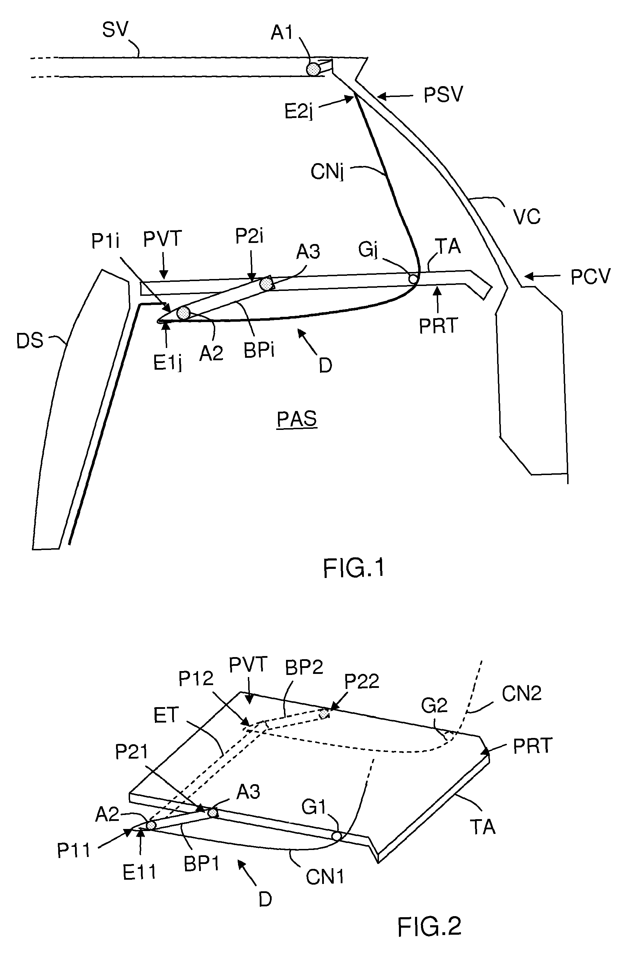

On a schématiquement représenté sur la figure 1 une portion d'une partie arrière PAS d'une structure SV d'un véhicule automobile sur laquelle est monté à rotation, sur un axe A1, un volet VC permettant d'accéder au coffre de l'extérieur.

Dans ce qui suit, on considère, à titre d'exemple non limitatif, que le véhicule automobile est de type bicorps ou break.

La partie arrière PAS de la structure SV est équipée d'une tablette TA rigide et d'un dispositif d'escamotage D selon l'invention, chargé d'escamoter cette tablette TA lorsque le volet VC est entraîné en rotation vers le haut. La tablette TA et son dispositif d'escamotage D constituent un ensemble.

Lorsque la tablette TA et le volet VC sont dans leur position rabattue (illustrée sur la figure 1), la tablette TA est placée sensiblement parallèlement au plancher du véhicule et comprend une partie avant PVT située à proximité de la face arrière du dossier DS des sièges arrières et une partie arrière PRT située à proximité de la face interne du volet VC. La tablette TA est alors située à un niveau qui correspond à celui de la partie centrale PCV du volet VC.

Comme cela est illustré sur les figures 1 et 2, un dispositif d'escamotage D, selon l'invention, comprend au moins un mécanisme d'escamotage BPi et au moins un cordon d'entraînement CNj.

Le mécanisme d'escamotage BPi est monté à rotation, d'une part, par rapport à deux parties latérales opposées de la structure SV, et d'autre part, par rapport à deux parties latérales opposées de la tablette TA. On notera que les parties latérales sont celles qui sont situées sur les côtés longitudinaux du véhicule, c'est-à-dire du côté des portières.

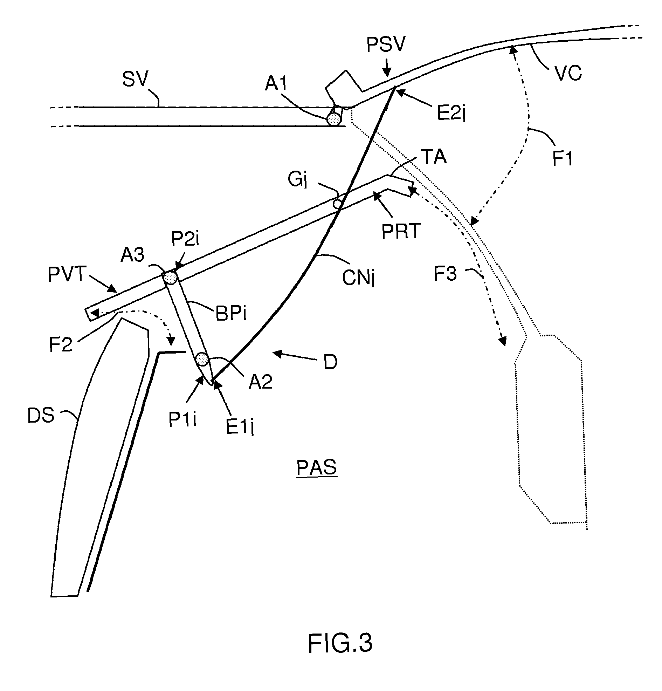

Chaque cordon (d'entraînement) CNj est fixé au mécanisme d'escamotage BPi et à la partie supérieure PSV du volet VC (qui est montée à rotation sur l'axe A1) afin d'entraîner ce mécanisme d'escamotage BPi en rotation par rapport à la structure SV lorsque le volet VC est entraîné en rotation vers le haut (flèche F1 de la figure 3).

De préférence, et comme illustré sur la figure 2, le dispositif d'escamotage D comprend deux cordons CNj (j = 1 ou 2), comportant chacun une première extrémité E1j, fixée au mécanisme d'escamotage BPi, et une seconde extrémité E2j, opposée à la première extrémité E1j et fixée à la partie supérieure PSV du volet VC.

Par ailleurs, chaque cordon CNj est préférentiellement élastique.

Grâce à ce dispositif d'escamotage D, la tablette TA peut être entraînée en rotation vers le haut de la structure SV et en translation vers l'avant de la structure SV (voir flèche F2 de la figure 3), lorsque son mécanisme d'escamotage BPi est entraîné en rotation par rapport à la structure SV.

Comme illustré sur la figure 2, le mécanisme d'escamotage BPi peut par exemple comprendre deux biellettes principales BPi (i = 1 ou 2) sensiblement parallèles.

Comme illustré sur les figures 1 et 3, chaque biellette principale BPi comprend une première extrémité P1i qui est montée à rotation par rapport à des premiers endroits choisis des deux parties latérales opposées de la structure SV. Cette rotation se fait au moyen d'un axe A2 qui peut saillir de la première extrémité P1i, ou qui peut être solidarisé à la première extrémité P1i, ou encore qui peut être solidarisé à la structure SV.

Par ailleurs, chaque biellette principale BPi comprend une seconde extrémité P2i, opposée à sa première extrémité P1i et montée à rotation par rapport à des seconds endroits choisis des deux parties latérales opposées de la tablette TA. Cette rotation se fait au moyen d'un axe A3 qui est par exemple solidarisé à la tablette TA. On notera que les seconds endroits (des deux parties latérales opposées de la tablette TA) sont plus proches du volet VC que les premiers endroits (des deux parties latérales opposées de la structure SV) lorsque la tablette TA est placée dans sa position rabattue (illustrée sur la figure 1).

Dans le mode de réalisation illustré (non limitatif), chaque axe (de rotation) A3 qui couple la tablette TA au mécanisme d'escamotage (ici à une seconde extrémité P2i d'une biellette principale BPi) est mobile par rapport à l'axe (de rotation) A2 qui couple ce mécanisme d'escamotage (ici la première extrémité P1i d'une biellette principale BPi) à une partie latérale de la structure SV, de sorte que la distance entre les axes A2 et A3 demeure constante.

Dit autrement, et compte tenu du fait que dans le mode de réalisation illustré l'axe (de rotation) A2 est fixe par rapport à la structure SV, chaque axe (de rotation) A3 est mobile en rotation autour de l'axe (de rotation) A2.

Par ailleurs, dans ce mode de réalisation, la première extrémité E1j de chaque cordon CNj est fixée à la première extrémité P1i de l'une des biellettes principales BPi, au-delà de l'axe A2, afin de pouvoir entraîner cette biellette principale BPi en rotation vers le haut lorsque la seconde extrémité E2j de ce cordon CNj est tirée vers le haut par le volet VC (voir figure 3).

Comme illustré sur la figure 2, le dispositif d'escamotage BPi peut éventuellement comprendre une entretoise transversale ET couplant les deux biellettes principales BP1 et BP2 au niveau de leurs premières extrémités P11 et P12 respectives. On comprendra que cette entretoise transversale ET est destinée à renforcer la solidité du mécanisme d'escamotage BPi.

Par ailleurs, et comme illustré sur les figures 1 à 3, le dispositif d'escamotage D peut comprendre des butées Gj en nombre égal au nombre de ses cordons d'entraînement CNj. Chaque butée Gj est montée sur l'une des parties latérales opposées de la tablette TA, de préférence dans la partie arrière PRT de cette dernière, et agencée de manière à reposer sur un cordon CNj lorsque la tablette TA est dans sa position rabattue (figure 1) ou qu'elle est entraînée en rotation vers le haut (flèche F3 de la figure 3), du fait de l'entraînement en rotation vers le haut du volet VC (flèche F1 de la figure 3). Ainsi, la partie arrière PRT de la tablette TA peut être supportée et maintenue par le(s) cordon(s) CNj non seulement lorsqu'elle est dans sa position rabattue (figure 1), mais également lorsqu'elle est entraînée de sa position rabattue vers sa position escamotée, redressée vers le haut (figure 3).

On notera que chaque butée Gj peut éventuellement comprendre une gorge (non représentée) dans laquelle passe un cordon CNj. Cela permet de faciliter le guidage du cordon CNj lorsqu'il est déplacé par le volet VC.

Avec l'exemple de réalisation illustré sur les figures 1 à 3 et présenté ci-avant, lorsque le volet VC est entraîné en rotation vers le haut (flèche F1 de la figure 3), il entraîne avec lui le(s) cordon(s) CNj, ce qui provoque la rotation des deux biellettes principales BP1 et BP2 par rapport à la structure SV. Cette dernière rotation fait remonter la tablette TA vers le haut tout en provoquant sa translation vers l'avant du véhicule (flèche F2 de la figure 3), du fait que la tablette TA est montée à rotation par rapport aux biellettes principales BPi. Dans le même temps, la partie arrière PRT de la tablette TA est entraînée en rotation vers le haut (flèche F3 de la figure 3) par le(s) cordon(s) CNj qui pousse(nt) sur sa (ses) butée(s) Gj et l'empêche(nt) de retomber sous l'effet de son propre poids.

La tablette TA demeure donc en permanence intégralement à l'intérieur de la structure SV lorsque le volet VC est entraîné en rotation vers le haut. Grâce à cela, on peut utiliser une tablette TA dont la largeur est sensiblement plus grande que celle des tablettes qui sont habituellement utilisées, et donc des appuis de tablette (non représentés) de faible, voire très faible, encombrement, qui autorisent plus facilement les chargements volumineux.

Lorsque le volet VC est entraîné en rotation vers le bas pour refermer le coffre, cela détend le(s) cordon(s) CNj et donc provoque la rotation vers le bas des deux biellettes principales BP1 et BP2 par rapport à la structure SV sous l'effet du poids de la tablette TA. Cette dernière peut ainsi regagner sa position rabattue (figure 1) en suivant au niveau de ses parties avant PVT et arrière PRT les trajets matérialisés respectivement par les flèches F2 et F3 de la figure 3.

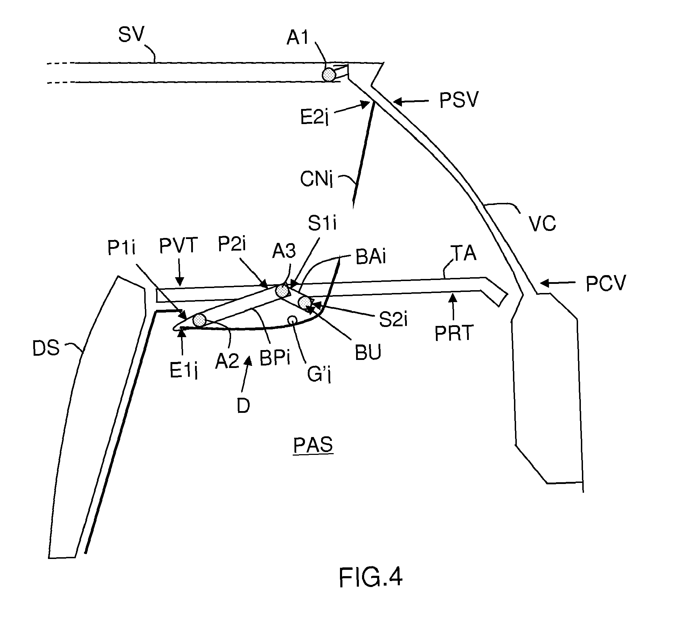

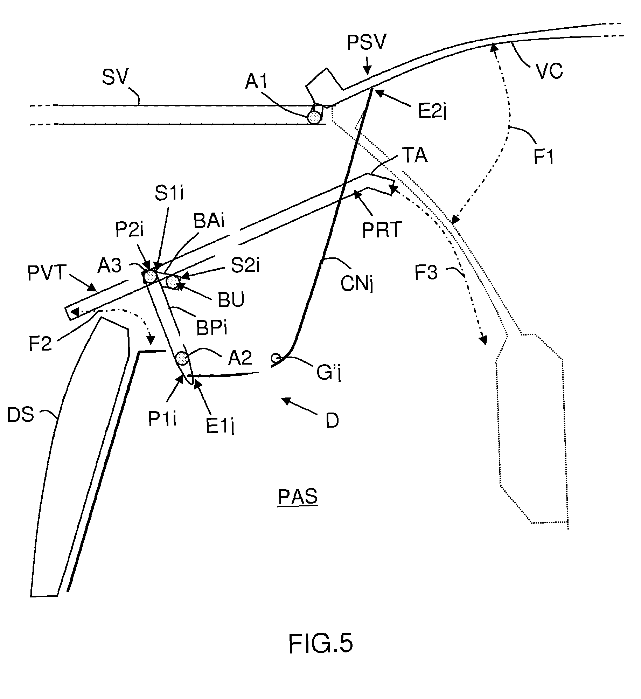

On se réfère maintenant aux figures 4 et 5 pour décrire une variante de réalisation du dispositif d'escamotage D. Dans cette variante, le dispositif d'escamotage D comprend toujours un mécanisme d'escamotage à deux biellettes principales BPi et un ou deux cordons d'entraînement CNj. Mais, le mécanisme d'escamotage comprend également des moyens de blocage BAi destinés à empêcher que la partie arrière PRT de la tablette TA ne retombe vers le bas lorsqu'elle est entraînée vers le haut par le(s) cordon(s) CNj. En effet, dans cette variante de réalisation on ne prévoit pas de butée Gj sur les parties latérales de la tablette TA pour permettre le support de sa partie arrière PRT. Ici, les moyens de blocage BAi sont agencés de manière à n'autoriser la rotation des biellettes principales BPi par rapport à la tablette TA que sur un secteur angulaire limité, prédéfini.

Pour ce faire, les moyens de blocage BAi peuvent par exemple comprendre au moins une biellette auxiliaire BAi, et de préférence deux.

Chaque biellette auxiliaire BAi comprend une première extrémité S1i qui est solidarisée à l'une des parties latérales opposées de la tablette TA, par exemple au niveau de l'axe A2, et qui est agencée pour limiter la rotation des biellettes principales BPi par rapport à la tablette TA sur le secteur angulaire limité. Cette fonction de limitation de la rotation peut être assurée par une surépaisseur locale ou une saillie locale de la première extrémité S1i, sur laquelle vient buter le bord de la biellette principale BPi correspondante.

Par ailleurs, chaque biellette auxiliaire BAi comprend une seconde extrémité S2i, opposée à sa première extrémité S1 i, et munie d'une butée BU destinée à supporter la tablette TA et à l'aider à supporter les contraintes subies par sa première extrémité S1i lorsqu'elle empêche la rotation de la biellette principale BPi correspondante.

On notera que dans cette variante de réalisation (au moins), il est avantageux que le dispositif d'escamotage D comprenne également au moins un guide G'j monté sur l'une des parties latérales opposées de la structure SV et agencé pour guider le déplacement d'un cordon CNj lorsque le volet VC est entraîné en rotation. On comprendra qu'en présence de deux cordons CNj il est préférable de prévoir deux guides G'j.

Chaque guide G'j peut par exemple se présenter sous la forme d'une roulette munie de préférence d'une gorge (non représentée) dans laquelle passe un cordon CNj. Cela permet de faciliter le guidage du cordon CNj lorsqu'il est déplacé par le volet VC.

Avec l'exemple de réalisation illustré sur les figures 4 et 5 et présenté ci-avant, lorsque le volet VC est entraîné en rotation vers le haut (flèche F1 de la figure 5), il entraîne avec lui le(s) cordon(s) CNj, ce qui provoque la rotation des deux biellettes principales BP1 et BP2 par rapport à la structure SV. Cette dernière rotation fait remonter la tablette TA vers le haut tout en provoquant sa translation vers l'avant du véhicule (flèche F2 de la figure 5), du fait que la tablette TA est montée à rotation par rapport aux biellettes principales BPi. La partie arrière PRT de la tablette TA est spontanément entraînée en rotation vers le bas sous l'effet de son propre poids. Cependant, cette dernière rotation est limitée par la présence des bielles auxiliaires BAi. Par conséquent, une fois que la rotation de la tablette TA par rapport aux biellettes principales BPi est bloquée, la partie arrière PRT de la tablette TA est contrainte à remonter vers le haut de la structure SV.

La tablette TA demeure donc également en permanence intégralement à l'intérieur de la structure SV lorsque le volet VC est entraîné en rotation vers le haut.

L'invention ne se limite pas aux modes de réalisation de dispositif d'escamotage et d'ensemble (tablette plus dispositif d'escamotage) décrits ci-avant, seulement à titre d'exemple, mais elle englobe toutes les variantes que pourra envisager l'homme de l'art dans le cadre des revendications ci-après.

## Revendications

1. Dispositif (D) d'escamotage d'une tablette (TA) destinée à être installée à proximité d'un volet de coffre (VC) monté à rotation sur une partie arrière supérieure d'une structure (SV) de véhicule automobile, **caractérisé en ce qu'**il comprend i) un mécanisme d'escamotage (BPi, BAi) destiné à être monté à rotation, d'une part, par rapport à deux parties latérales opposées de ladite structure (SV), et d'autre part, par rapport à deux parties latérales opposées de ladite tablette (TA), pour entraîner ladite tablette (TA) en rotation vers le haut et en translation vers l'avant de ladite structure (SV) lorsqu'il est entraîné en rotation par rapport à ladite structure (SV), et ii) au moins un cordon (CNj) fixé audit mécanisme d'escamotage (BPi) et destiné à être fixé à une partie supérieure dudit volet (VC) pour entraîner ledit mécanisme d'escamotage (BPi) en rotation par rapport à ladite structure (SV) lorsque ledit volet (VC) est entraîné en rotation vers le haut.

2. Dispositif selon la revendication 1, **caractérisé en ce que** ledit mécanisme d'escamotage (BPi, BAi) comprend deux biellettes principales (BPi) comportant des premières extrémités (P1i), destinées à être montées à rotation par rapport à des premiers endroits des deux parties latérales opposées de la structure (SV), et des secondes extrémités (P2i), opposées aux premières (P1i) et destinées à être montées à rotation par rapport à des seconds endroits des deux parties latérales opposées de la tablette (TA), plus proches dudit volet (VC) que lesdits premiers endroits lorsque ladite tablette (TA) est placée dans une position rabattue, et **en ce que** ledit cordon (CNj) comprend des première (E1j) et seconde (E2j) extrémités respectivement fixée à la première extrémité (P1i) de l'une desdites biellettes principales (BPi) et destinée à être fixée à ladite partie supérieure du volet (VC), de manière à entraîner en rotation ladite tablette (TA) par rapport à ladite structure (SV) lorsque ledit volet (VC) est entraîné en rotation vers le haut.

3. Dispositif selon la revendication 2, **caractérisé en ce qu'**il comprend deux cordons (CNj) dont les premières extrémités (E1j) sont respectivement fixées aux premières extrémités (P1i) desdites biellettes principales (BPi).

4. Dispositif selon l'une des revendications 2 et 3, **caractérisé en ce que** lesdites premières extrémités (P1i) des biellettes principales (BPi) sont couplées entre elles par une entretoise transversale (ET).

5. Dispositif selon l'une des revendications 1 à 4, **caractérisé en ce qu'**il comprend au moins une butée (Gj) montée sur l'une desdites parties latérales opposées de la tablette (TA) et agencée pour reposer sur un cordon (CNj) lorsque ledit volet (VC) est entraîné en rotation vers le haut, de manière à permettre le maintien de ladite tablette dans une position escamotée redressée vers le haut.

6. Dispositif selon la revendication 5, **caractérisé en ce que** chaque butée (Gj) comprend une gorge dans laquelle passe un cordon (CNj).

7. Dispositif selon l'une des revendications 1 à 4, **caractérisé en ce que** ledit mécanisme d'escamotage (BPi, BAi) comprend des moyens de blocage (BAi) agencés pour autoriser sa rotation par rapport à ladite tablette (TA) sur un secteur angulaire limité, prédéfini.

8. Dispositif selon la revendication 7, **caractérisé en ce que** lesdits moyens de blocage (BAi) comprennent au moins une biellette auxiliaire (BAi) comprenant une première extrémité (S1i), solidarisée à l'une desdites parties latérales opposées de la tablette (TA) et agencée pour limiter la rotation dudit mécanisme d'escamotage (BPi, BAi) sur ledit secteur angulaire limité, et une seconde extrémité (S2i), munie d'une butée propre à supporter ladite tablette (TA).

9. Dispositif selon la revendication 8, **caractérisé en ce que** lesdits moyens de blocage (BAi) comprennent deux biellettes auxiliaires (BAi).

10. Dispositif selon l'une des revendications 7 à 9, **caractérisé en ce qu'**il comprend au moins un guide (G'j) monté sur l'une desdites parties latérales opposées de la structure (SV) et agencé pour guider le déplacement d'un cordon (CNj) lorsque ledit volet (VC) est entraîné en rotation.

11. Dispositif selon la revendication 10, **caractérisé en ce que** chaque guide (G'j) est une roulette munie d'une gorge dans laquelle passe un cordon (CNj).

12. Ensemble, **caractérisé en ce qu'**il comprend i) une tablette (TA), destinée à être installée à proximité d'un volet de coffre (VC) monté à rotation sur une partie arrière supérieure d'une structure (SV) de véhicule automobile, et ii) un dispositif (D) d'escamotage selon l'une des revendications précédentes, couplé à ladite tablette (TA).
